# EUROPÄISCHE PATENTSCHRIFT

(11) **EP 0 997 558 B1**
(45) Veröffentlichungstag und Bekanntmachung des Hinweises auf die Patenterteilung: **19.11.2003**
(21) Anmeldenummer: 99114312.4
(22) Anmeldetag: 21.07.1999
(51) Int. Cl.: C25D 21/02, C25D 21/08, C25D 21/20, C02F 1/04

(54) **Verfahren zum Betreiben einer Anlage zum chemischen und/oder elektrolytischen Behandeln von Aluminiumoberflächen sowie Vorrichtung zum chemischen und/oder elektrolytischen Behandeln von Aluminiumoberflächen**
Process for operating a plant for the chemical or electrochemical treatment of aluminium surfaces and apparatus for the chemical or electrochemical treatment of aluminium surfaces
Procédé pour la mise en oeuvre d'une installation pour le traitement chimique et/ou électrolytique de surfaces en aluminium et dispositif pour le traitement chimique et/ou électrolytique de surfaces en aluminium

(30) Priorität: 08.08.1998 DE 19835945
(43) Veröffentlichungstag der Anmeldung: 03.05.2000
(73) Patentinhaber: Kupper, Richard, 58638 Iserlohn (DE)
(72) Erfinder: Kupper, Richard, 58638 Iserlohn (DE)
(74) Vertreter: Schröter & Haverkamp

(56) Entgegenhaltungen:
- US-A- 2 853 442
- US-A- 4 206 018
- US-A- 4 790 904
- F. LINNHOFF: "Die Eindampftechnik in der Praxis der Galvanik" GALVANOTECHNIK, Bd. 88, Nr. 12, 1997, Seiten 4120-4124, XP002183894 Saulgau

## Beschreibung

Die Erfindung bezieht sich auf das Gebiet des Betreibens einer Anlage zum chemischen und/oder elektrolytischen Behandeln von Aluminiumoberflächen sowie auf eine Vorrichtung zum chemischen und/oder elektrolytischen Behandeln von Aluminiumoberflächen - eine Eloxalanlage. Insbesondere betrifft die Erfindung ein Verfahren zum Betreiben einer Anlage zum chemischen und/oder elektrolytischen Behandeln von Aluminiumoberflächen, bei welchen Behandlungsschritten Prozeßwärme freigesetzt wird, welches Verfahren eine Kühlung der durch die Behandlung erwärmten Prozeßbäder und eine Bereitstellung von reinem Spülwasser umfaßt, sowie eine Vorrichtung zum chemischen und/oder elektrolytischen Behandeln von Aluminiumoberflächen mit zumindest einem Prozeßbad zum Durchführen eines chemischen und/oder elektrolytischen, Reaktionswärme freisetzenden Behandlungsschrittes, mit einer Kühleinrichtung zum Kühlen des zumindest einen Prozeßbades und mit einer Einrichtung zum Reinigen des benutzten Spülwassers.

Die Oberflächen von Aluminiumgegenständen werden zur Erzielung unterschiedlicher Oberflächeneigenschaften chemisch und/oder elektrolytisch behandelt. Ein derartiges Oberflächenbehandlungsverfahren stellt die anodische Oxidation im weiteren Sinne dar. Mit diesem Oberflächenbehandlungsverfahren läßt sich nicht nur das Aussehen der Oberfläche eines Aluminiumgegenstandes den gewünschten Ansprüchen entsprechend gestalten, sondern insbesondere kann durch ein solches Verfahren die Korrosionsbeständigkeit gegenüber unbehandeltem Aluminium erheblich erhöht werden. Im Mittelpunkt der Oberflächenbehandlung eines Aluminiumgegenstandes steht die anodische Oxidation im eigentlichen Sinne, nämlich die elektrolytische Behandlung des Aluminiums in einem sauren Prozeßbad. Zum Durchführen dieses Oberflächenbehandlungsschrittes müssen mehrere Vor- und Nachbehandlungsschritte durchgeführt werden. Nach einer ersten mechanischen Vorbehandlung, welches ein Schleifen, Polieren, Sandstrahlen oder dergleichen beinhalten kann, wird in einem ersten chemischen Vorbehandlungsschritt die Oberfläche des Aluminiumgegenstandes chemisch gereinigt und entfettet. Zur chemischen Reinigung werden beispielsweise Beizbäder aus Natronlauge eingesetzt. In einem weiteren Behandlungsschritt erfolgt in einem sauren Prozeßbad, beispielsweise Schwefelsäure die elektrolytische Behandlung, die eigentliche anodische Oxidation der Oberfläche des zu behandelnden Aluminiumgegenstandes. Anschließend kann die Oberfläche chemisch und/oder elektrolytisch gefärbt und/oder verdichtet werden.

Um eine Bäderverunreinigung zu vermeiden und insbesondere auch um die in einem Prozeßbad durchzuführenden chemischen Reaktionen zu einem bestimmten Zeitpunkt zu beenden, müssen die Aluminiumgegenstände nach jeder chemischen Behandlung gespült werden. Zu dieser Eliminierung und Unschädlichmachung der nach Entnahme der Aluminiumgegenstände aus einem Prozeßbad an diesen anhaftenden Restbestandteile der Prozeßbäder werden entsprechend große Mengen an reinem Spülwasser benötigt.

Damit die gewünschten chemischen Reaktionen in den jeweiligen Prozeßbädem bestimmungsgemäß verlaufen, ist es notwendig die Prozeßbäder zu temperieren. Beispielsweise verlaufen die chemischen Prozesse sowohl im Beizbad als auch bei der elektrolytischen Behandlung im Eloxalbad exotherm ab. Neben der benötigten Menge an Spülwasser muß zum bestimmungsgemäßen Betreiben einer solchen Eloxalanlage somit auch eine ausreichende Menge an Kühlwasser zum Kühlen bzw. Temperieren der Prozeßbäder bereitgestellt werden. Aufgrund des großen Wasserbedarfes der Eloxalwerke wurden diese vielfach an Flüssen angesiedelt, damit das Flußwasser als Kühlwasser verwendet werden kann und damit das anfallende benutzte und gereinigte Spülwasser in den Fluß eingeleitet werden kann. Als Spülwasser wird frisches Leitungswasser verwendet. Zur Reinigung des benutzten und somit mit Prozeßbadresten kontaminierten Spülwassers werden neben entsprechenden Sammelbecken zum Sammeln der Spülwässer der unterschiedlichen Prozeßbäder Mischbehälter mit Rührwerken zum Neutralisieren der benutzten Spülwässer, eine Filterpresse sowie der Filterpresse entsprechend vorgeschaltete Vorbehandlungs- und Nachbehandlungseinrichtungen benötigt.

In der Filterpresse wird das neutralisierte Spülwasser bezüglich der darin enthaltenen ausgefällten Festbestandteile gefiltert, so daß aus der Filterpresse ein Filterschlamm und ein gereinigtes Filtrat abziehbar ist. Das Filtrat bedarf einer Nachbehandlung, beispielsweise in einem Schrägklärer, einem Kiesfilter und einer Endkontrolleinrichtung, bevor das Filtrat beispielsweise in einen Fluß oder in einen behördlichen Abwasserkanal direkt eingeleitet werden kann. Der Filterschlamm wird entsorgt, wobei zur Reduzierung der Entsorgungskosten der Filterschlamm zur Gewichtsverringerung zuvor getrocknet werden kann.

Derartig betriebene Eloxalanlagen haben einen sehr großen Wasserbedarf und, sollte eine Prozeßbadkühlung nicht mit dem Wasser eines angrenzenden Flusses möglich sein, muß eine solche Eloxalanlage entsprechende Kühleinrichtungen aufweisen. Der große Spülwasserbedarf einer solchen Eloxalanlage kann das Unternehmen mit nicht unerheblichen Wasser- bzw. Abwassergebühren belasten. Zur Reduzierung der benötigten Spülwassermenge war man daher bemüht die Abtropfbedingungen und die angewendeten Spülverfahren zu optimieren. Ferner wurden Überlegungen angestellt, das benutzte Spülwasser nach einer entsprechenden Reinigung wieder als reines Spülwasser einzusetzen. Vorgeschlagen wurde der Einsatz einer Ionenaustauscheranlage, der eine Kaskadenspülung vorgeschaltet war. Lediglich das Spülwasser des letzten Spülganges der Kaskadenspülung, welches entsprechend gering verunreinigt ist, soll eine solche Ionenaustauscheranlage durchlaufen. Nachteilig ist jedoch bei einer solcher Ionenaustauscheranlage, daß sie nur zur Aufnahme einer begrenzten Schadstoffmenge ausgelegt sind. Diese in dem Ionenaustauscher an ein Harz gebundenen Schadstoffe müssen anschließend mit Chemikalien und mit reinem Wasser aus dem lonenaustauscher wieder herausgespült werden.

Auch wenn sich durch Einsatz einer solchen Ionenaustauscheranlage die benötigte Spülwassermenge um einen gewissen Betrag reduzieren läßt, so ist eine solche Ionenaustauscheranlage nicht für einen kontinuierlichen Reinigungsprozeß und auch nicht für einen großen Spülwasserdurchsatz geeignet. Nachteilig ist insbesondere auch, daß speziell bei einer Verwendung von organischen Aluminiumfarbstoffen die aus diesen Bädern mitgeschleppten Farbstoffanteile die Funktion eines solchen lonenaustauschers beeinträchtigen.

In der Zeitschrift "Metalloberfläche" 51 (1997) 3, Seiten 174 - 178 ist im Rahmen eines Glänzprozesses für Aluminium ein Verfahren zum Aufkonzentrieren der eingesetzten Säuren beschrieben. Bei diesem Vorgang sollen die zum Glänzen eingesetzten Säuren, die durch Verschleppungen in die Spülbäder eingebracht worden sind, aufkonzentriert und erneut den Prozeßbädem das zum Reduzieren des Einsatzes neuer Säuren sowie der Entsorgungsmenge zugeführt werden. Zum Aufkonzentrieren des Spülwassers ist ein Verdampfer eingesetzt. Im Gegensatz zu einer Eloxalbehandlung von Aluminiumoberflächen ist es bei diesem Verfahren notwendig, die Prozeßbäder auf die gewünschte Prozeßtemperatur zu erwärmen und auch dem Verdampfer die zum Durchführen des gewünschten Verdampfungsprozesses notwendige Energie zuzuführen. Die Prozeß- und Verfahrensbedingungen zum Durchführen einer Eloxalbehandlung einer Aluminiumoberfläche unterscheiden sich in wesentlichen Punkten von denjenigen zum Glänzen von Aluminiumoberflächen verwendeten Verfahrensschritte.

Ferner ist aus "Die Praxis der anodischen Oxidation des Aluminiums" (1988) 4. Auflage, Seiten 456 - 461 bekannt, daß die zur Kühlung der für die anodische Oxidation vorgesehenen Prozeßbäder eingesetzten Kältemaschinen anstelle durch eine Rückkühlung mittels Spülwasser durch einen zweiten Kreislauf zum Erwärmen eines Färbebades gekühlt werden können. Die auf diese Weise gewonnene Wärmeenergie ist jedoch nur gering.

In US 2 853 442 A ist ein Verfahren beschrieben, mit dem im Zusammenhang mit einer elektrolytischen Oberflächenbehandlung eines Gegenstandes die Elektrolytkonzentration in dem Prozeßbad und die in dem Prozeßbad vorherrschende Temperatur gleichbleiben soll. Zu diesem Zweck wird dem Prozeßbad Elektrolyt entnommen und entsprechend temperiert erneut in das Prozeßbad eingebracht, so daß nach Vermischen des zugeführten temperierten und aufkonzentrierten Elektrolyts das Prozeßbad die gewünschte Temperatur und auch die gewünschte Elektrolytkonzentration aufweist. Dieser Prozeß erfolgt kontinuierlich.

US 4 206 018 A offenbart ein Verfahren zum Durchführen eines elektrolytischen Oberflächenbehandlungsvorgangs. Beschrieben ist in diesem Dokument ein Chromatierungsprozeß, bei dem in dem Prozeßbad Wärme freigesetzt wird. Die Wärme in dem Prozeßbad wird durch einen Wärmetauscher abgeführt und in einem Spülwasserbehälter eingebracht, um das darin befindliche Spülwasser zu erwärmen, bevor dieses zum Spülen des beschichteten Gegenstandes eingesetzt wird.

Ausgehend von diesem erörterten Stand der Technik liegt der Erfindung zum einen die Aufgabe zugrunde, ein eingangs genanntes gattungsgemäßes Verfahren zum Betreiben einer Eloxalanlage bereitzustellen, bei dem nicht nur die verbrauchte Spülwassermenge und die verbrauchte Kühlwassermenge auf ein Minimum reduziert ist, sondern bei dem auch die eingesetzte Energie auf ein Minimum reduziert ist, und zum anderen die Aufgabe zugrunde, eine eingangs genannte gattungsgemäße Eloxalanlage bereitzustellen, deren Wirtschaftlichkeit durch eine Reduzierung der eingesetzten Wassermenge und durch eine Reduzierung der eingesetzten Energie erheblich verbessert ist.

Die verfahrensbezogene Aufgabe wird durch die Merkmale des Kennzeichens des Anspruchs 1 gelöst.

Die vorrichtungsbezogene Aufgabe wird erfindungsgemäß durch die kennzeichnenden Merkmale des Anspruchs 5 gelöst.

Durch die Erfindung ist eine Eloxalanlage bereitgestellt, die einen Kühlwasserkreislauf und einen Spülwasserkreislauf aufweist, so daß die Menge des jeweils neu zuzuführenden Wassers nur sehr gering ist. Ein gewisser Spülwasserverlust ist unumgänglich. Lediglich diese Wassermenge braucht durch neu in den Kühlwasserkreislauf eingebrachtes Wasser ergänzt zu werden. Darüber hinaus ist erkannt worden, daß die durch einen Kühlwasserkreislauf abgeführte Wärme zum Betreiben einer zum Reinigen der Spülwässer eingesetzten Verdampfereinheit verwendet werden kann. Zu diesem Zweck ist in den Kühlwasserkreislauf der Prozeßbäder, insbesondere auch des Beizbades eine Wärmetauschereinrichtung eingeschaltet, die ausgangsseitig mit dem Heizeingang der Verdampfereinrichtung verbunden ist. Diese Besonderheit führt in einem nicht unerheblichen Maße zu einer Reduktion der zum Betreiben der Anlage eingesetzten Energiekosten. Zum Betreiben der Verdampfereinheit braucht keine zusätzliche Energie aufgewendet werden.

Im Zuge eines solchen Verdampfungsprozesses kann aus dem verunreinigten Spülwasser reines (destilliertes) Spülwasser in einem kontinuierlichen Prozeß und auch in der benötigten Menge gewonnen werden. Zurück bleibt ein Konzentrat, in dem die aus den Prozeßbadmitschleppungen gebildeten Spülwasserverunreinigungen angereichert sind. Zweckmäßigerweise wird der Verdampfungsprozeß so gesteuert, daß die Dichte dieses Konzentrates der Dichte der verbrauchten Prozeßbäder entspricht, so daß das Konzentrat dem verbrauchten Prozeßbad zu seiner Wiederverwertung beigemengt werden kann.

Es ist zweckmäßig, zur Temperierung des oder der Prozeßbäder die daran angeschlossenen Wärmetauscher zur Wärmegewinnung zur Betreibung der Verdampfer so auszugestalten, daß mit diesen Wärmetauschern gleichzeitig die Prozeßbäder in der gewünschten Temperatur temperiert werden können. Von einer solchen Eloxalanlage wird ebenfalls kein Kühlwasser benötigt.

In einer besonders zweckmäßigen Ausgestaltung einer solchen Eloxalanlage sind sowohl den zum Beizen vorgesehenen Prozeßbädern als auch den zur eigentlichen anodischen Oxidation vorgesehenen Prozeßbädern jeweils ein Wärmetauscher zugeordnet. Bei diesen beiden chemischen bzw. elektrochemischen Oberflächenbehandlungen wird in den jeweiligen Prozeßbädern die meiste Wärme im Rahmen der gesamten Behandlungsschritte freigesetzt. Die mit den Wärmetauschern gewonnene Wärme wird in einem der Verdampfereinheit vorgeschalteten Puffertank gespeichert, so daß der Verdampfereinheit entsprechend dem Verdampfungsprozeß bzw. entsprechend dem Fortschritt des Verdampfungsprozesses eine entsprechende Wärmemenge, etwa in Form von Warmwasser zugeführt werden kann.

In einer solchen Ausgestaltung umfaßt die Verdampfereinheit zwei einzelne Verdampfer, von denen einer zur Reinigung der beim Beizen der Aluminiumgegenstände anfallenden alkalischen Spülwässer und der andere zum Reinigen der bei der anodischen Oxidation entstehenden sauren Spülwässer vorgesehen ist. Das in beiden Verdampfern entstehende Destillat fließt in einen gemeinsamen Destillatsammelbehälter, aus dem für die jeweiligen Spülbäder die gewünschte Menge abgezogen werden kann.

Aus der Beschreibung der Erfindung wird deutlich, daß mit dem erfindungsgemäßen Verfahren eine Eloxalanlage unter Ausnutzung der entstehenden Prozeßwärme nur mit einem Minimum an neu zuzuführendem reinem Spülwasser und mit der Möglichkeit bezogen auf das Spülwasser, abfall- und abwasserfrei arbeiten zu können, betreibbar ist.

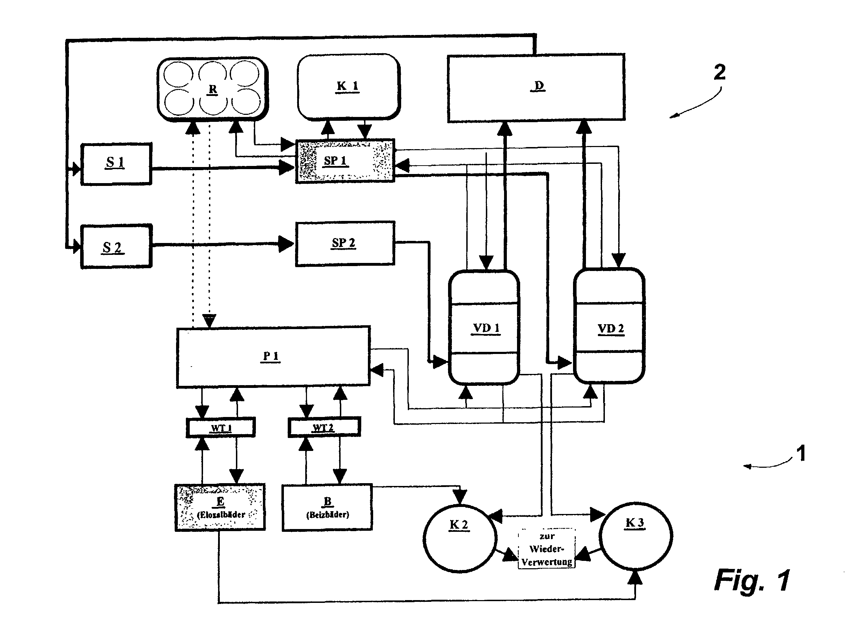

Weitere Vorteile und Weiterbildungen der Erfindung sind Bestandteil der übrigen Unteransprüche sowie der nachfolgenden Beschreibung eines Ausführungsbeispieles unter Bezug auf die beigefügte **Figur 1**. Figur 1 zeigt in einer schematischen Darstellung eine Eloxalanlage 1 zum anodischen Oxidieren von Oberflächen von Aluminiumgegenständen. Dabei bezieht sich der hier verwendete Begriff der anodischen Oxidation soweit nicht anders gekennzeichnet auf das gesamte Behandlungsverfahren mit den notwendigen Vor- und Nachbehandlungsschritten. Die Eloxalanlage 1 weist zur chemischen Vorbehandlung der zu behandelnden Aluminiumgegenstände ein zum Beizen vorgesehenes Prozeßbad B und ein zur elektrolytischen Oberflächenbehandlung vorgesehene Prozeßbad E, in dem die eigentliche anodische Oxidation erfolgt, auf. Die Abflüsse der beiden Prozeßbäder B, E sind an jeweils einen Lagertank K2 bzw. K3 angeschlossen, so daß die verbrauchten Flüssigkeiten - Lauge aus dem Beizbad B bzw. Säure aus dem Eloxalbad E- in den Lagertank K2 bzw. K3 fließen oder eingepumpt werden kann. Die verbrauchten Prozeßbadflüssigkeiten können einer Wiederverwertung, etwa einem Einsatz in der Papierindustrie oder zur Neutralisation in behördlichen Abwasserreinigungsanlagen zugeführt werden.

Zur Kühlung der beiden Prozeßbäder B, E sind jedem Prozeßbad B, E jeweils ein Wärmetauscher WT1 bzw. WT2 zugeordnet, die ihrerseits an einen Puffertank P1 angeschlossen sind. Die Wärmetauscher WT1 bzw. WT2 dienen zum Temperieren bzw. Kühlen des jeweiligen Prozeßbades E bzw. B während ihres Betriebes und können somit zur Wärmegewinnung eingesetzt werden. Die mit den Wärmetauschem WT1 und WT2 gewonnene Wärme wird in dem Puffertank P1 zwischengespeichert.

Der Puffertank P1 ist an zwei Vakummverdampfer VD1, VD2 angeschlossen, so daß die beiden Vakuumverdampfer VD1, VD2 mit der aus den Prozeßbädern B, E gewonnenen Wärme betrieben werden können.

Ferner ist an den Puffertank P1 eine Raumheizung R angeschlossen, so daß die aus den Prozeßbädern B, E gewonnene Wärme ebenfalls zum Heizen der Räume, in denen die Eloxalanlage 1 aufgebaut ist, verwendet werden kann.

Zum Spülen der in den Prozeßbädern B, E behandelten Aluminiumgegenstände sind Spülbäder S1 und S2 vorgesehen. Das Spülbad S1 dient zum Spülen der aus dem Prozeßbad E entnommenen Gegenstände; das Spülbad S2 dient zum Spülen der aus dem Prozeßbad B entnommenen Gegenstände. Die Spülbäder S1, S2 sind an einen Destillatsammelbehälter D angeschlossen, aus dem in ausreichender Menge reines Spülwasser zum Betreiben der Eloxalanlage 1 bezogen wird. Den Spülbädern S1 und S2 ist jeweils ein Sammelbehälter SP1 bzw. SP2 zur Aufnahme des benutzten Spülwassers nachgeschaltet. Jeder Sammelbehälter SP1 bzw. SP2 beaufschlagt einen Vakuumverdampfer VD1 bzw. VD2, wobei der Sammelbehälter SP1 den Vakuumverdampfer VD2 und der Sammelbehälter SP2 den Vakuumverdampfer VD1 beaufschlagt. Das von den Sammelbehältern SP1 bzw. SP2 in die Vakuumverdampfer VD2 bzw. VD1 einfließende verunreinigte Spülwasser wird in den Vakuumverdampfem VD1 bzw. VD2 durch eine Destillation gereinigt. Das in den Vakuumverdampfern VD1 und VD2 entstehende Destillat - das gereinigte Spülwasser - fließt in den Destillatsammelbehälter D. zurück. Das in den Vakuumverdampfem VD! und VD2 entstehende Konzentrat wird soweit verdichtet, daß dieses dieselbe Dichte aufweist, wie die aus den Prozeßbädern B, E in die Lagertanks K2 bzw. K3 abgeführte Flüssigkeit. Ist diese Dichte erreicht, wird das bei dem Verdampfungsprozeß zurückbleibende Konzentrat den Vakuumverdampfern VD1 bzw. VD2 entnommen und in die jeweiligen Lagertanks K2 bzw. K3 eingeleitet. Dieser Prozeß kann kontinuierlich vorgenommen werden.

Der Sammelbehälter SP1 hat neben seiner Funktion zum Sammeln der benutzten Spülwässer aus dem Spülbad S1 zudem die Funktion eines Puffertanks, für das im Kreislauf zu und von den Verdampfern VD1 und VD2 geführte und von zu einem Kühlturm K1 geführte Wasser.

Aus dieser schematischen Darstellung der Eloxalanlage 1 wird deutlich, daß das zum Betreiben der Eloxalanlage 1 eingesetzte Spülwasser sich in einem Spülwasserkreislauf 2 befindet. Dieser ist zu seiner Verdeutlichung mit einer stärkeren Strichführung kenntlich gemacht. Die in dem Spülwasserkreislauf 2 befindliche Spülwassermenge braucht somit lediglich um diejenige Wassermenge angereichert zu werden, die bei der Entnahme des in den Vakuumverdampfern VD1 und VD2 entstehenden Konzentrats abgeführt wird sowie durch die Verdunstungsverluste des Kühlturms K1 entstehen. Diese Menge ist jedoch verglichen mit der bei der Destillation gewonnenen reinen Spülwassermenge sehr gering.

### Zusammenstellung der Bezugszeichen

- 1: Eloxalanlage
- 2: Spülwasserkreislauf

- B: Prozeßbad, Beizbehandlung
- E: Prozeßbad, anodische Oxidationsbehandlung
- K2: Lagertank, alkalisch
- K3: Lagertank, sauer
- WT1: Wärmetauscher, Eloxalbad
- WT2: Wärmetauscher, Beizbad
- P1: Puffertank
- VD1: Vakuumverdampfer
- VD2: Vakuumverdampfer
- R: Raumheizung
- S1: Spülbad, sauer
- S2: Spülbad, alkalisch
- D: Destillatsammelbehälter
- SP1: Sammelbehälter, sauer
- SP2: Sammelbehälter, alkalisch
- K1: Kühlturm

## Patentansprüche

1. Verfahren zum Betreiben einer Anlage (1) zum chemischen und/oder elektrolytischen Behandeln von Aluminiumoberflächen, bei welchen Behandlungsschritten Prozeßwärme freigesetzt wird, welches Verfahren eine Kühlung der durch die Behandlung erwärmten Prozeßbäder und eine Bereitstellung von reinem Spülwasser umfaßt, **dadurch gekennzeichnet, daß** sowohl das zum Betreiben der Anlage (1) benötigte Spülwasser sowie das zum Kühlen der durch die Behandlung erwärmten Prozeßbäder (B, E) eingesetzte Kühlmedium jeweils in einem Kreislauf geführt werden und das Verfahren folgende Schritte beinhaltet:
a) Bereitstellen von reinem Spülwasser,
b) Spülen von oberflächenbehandelten Aluminiumgegenständen mit dem Spülwasser,
c) Reinigen des benutzten Spülwassers durch einen Verdampfungsprozeß, wobei die zum Betreiben des Verdampfungsprozesses benötigte Energie aus dem oder den zum Oberflächenbehandeln der Aluminiumgegenstände eingesetzten, durch Behandeln der Gegenstände erwärmten Prozeßbädern (B, E) dadurch gewonnen wird, daß den erwärmten Prozeßbädem (B, E) die Wärme durch einen Kühlprozeß entnommen wird, wobei die durch den Kühlvorgang abgeführte Wärme durch einen Wärmetauschprozeß dem eingesetzten, erwärmten Kühlmedium entzogen und zum Betreiben des Verdampfungsprozesses bereitgestellt und das abgekühlte Kühlmedium erneut in den Kühlvorgang eingesetzt wird, und
d) Zuführen des als Destillat vorliegenden gereinigten Spülwassers in einen Destillatsammelbehälter (D), aus dem das reine Spülwasser zum Spülen oberflächenbehandelter Aluminiumgegenstände bereitgestellt wird.

2. Verfahren nach Anspruch 1, **dadurch gekennzeichnet, daß** die Temperierung des oder der Wärme freisetzenden Prozeßbäder (B, E) durch die für den Verdampfungsprozeß benötigte Wärmegewinnung aus diesen Bädern (B, E) gesteuert wird.

3. Verfahren nach Anspruch 1 oder 2, **dadurch gekennzeichnet, daß** die aus den Prozeßbädern (B, E) gewonnene Wärme weiteren Wärme benötigenden Einrichtungen, etwa einer Raumheizung (R) zugeführt wird.

4. Verfahren nach einem der Ansprüche 1 bis 3, **dadurch gekennzeichnet, daß** der Verdampfungsprozeß zum Reinigen des Spülwassers derart gesteuert wird, daß das neben dem als Destillat vorliegenden gereinigten Spülwasser anfallende, die Verunreinigungen enthaltene Spülwasserkonzentrat eine Dichte aufweist, die der Dichte eines entsprechenden verbrauchten Prozeßbades entspricht.

5. Vorrichtung zum chemischen und/oder elektrolytischen Behandeln von Aluminiumoberflächen mit zumindest einem Prozeßbad (B, E) zum Durchführen eines chemischen und/oder elektrolytischen, Reaktionswärme freisetzenden Behandlungsschrittes, mit einer Kühleinrichtung zum Kühlen des zumindest einen Prozeßbades und mit einer Einrichtung zum Reinigen des benutzten Spülwassers, **gekennzeichnet durch**
- einen Spülwasserkreislauf (2) umfassend einen Destillatsammelbehälter (D), ein oder mehrere, in Flüssigkeitsverbindung mit dem Destillatsammelbehälter (D) stehende und ausgangsseitig an diesen angeschlossene Spülbäder (S1, S2) und eine Verdampfereinheit (VD1, VD2), die eingangsseitig an die Flüssigkeitsabflüsse der Spülbäder (S1, S2) angeschlossen ist und deren Ausgang zum Abziehen des als Destillat vorliegenden gereinigten Spülwassers in Flüssigkeitsverbindung mit dem Destillatsammelbehälter (D) steht,
- einen Kühlmittelkreislauf zum Kühlen des zumindest einen Prozeßbades (B, E) und
- eine in den Kühlmittelkreislauf eines Prozeßbades (B, E) eingeschaltete Wärmetauschereinheit (WT1, WT2) zum Entziehen der im Kühlmittel mitgeführten Wärme, an deren wärmeabführenden Ausgang der Eingang zum Aufheizen der Verdampfereinheit (VD1, VD2) angeschlossen ist, so daß die Verdampfereinheit (VD1, VD2) mit der aus dem Prozeßbad (B, E) gewonnenen Wärme betreibbar ist.

6. Vorrichtung nach Anspruch 5, **dadurch gekennzeichnet, daß** zwischen den Spülbädern (S1, S2) und der Verdampfereinheit (VD1, VD2) Sammelbehälter (SP1, SP2) zwischengeschaltet sind.

7. Vorrichtung nach Anspruch 6, **dadurch gekennzeichnet, daß** jedem Sammelbehälter (SP1, SP2) eine eigene Verdampfereinheit (VD2 bzw. VD1) zugeordnet ist.

8. Vorrichtung nach einem der Ansprüche 5 bis 7, **dadurch gekennzeichnet, daß** mehreren Wärme freisetzenden Prozeßbädern (B, E) Wärmetauschereinheiten (WT1, WT2) zugeordnet sind, und daß die Wärmetauschereinheiten (WT1, WT2) zum Zwischenspeichem der gewonnenen Wärme an einen gemeinsamen Puffertank (P1) angeschlossen sind.

9. Vorrichtung nach einem der Ansprüche 5 bis 8, **dadurch gekennzeichnet, daß** an den Puffertank (P1) weitere, die gewonnene Wärme nutzende Einrichtungen (R) angeschlossen sind.

## Claims

1. Method of operating a system (1) for the chemical and/or electrolytic treatment of aluminium surfaces, during which treatment steps process heat is released, which method includes a cooling of the process baths, which are heated by the treatment, and a provision of clean rinsing water, **characterised in that** both the rinsing water required for operating the system (1) and the cooling medium used to cool the process baths (B, E), which are heated by the treatment, are each conducted in a circuit, and the method includes the following steps:
a) providing clean rinsing water,
b) rinsing surface-treated aluminium objects with the rinsing water,
c) cleaning the used rinsing water by an evaporation process, wherein the energy, required for operating the evaporation process, is obtained from the process bath or baths (B, E) which is or are used for the surface treatment of the aluminium objects and is or are heated by treating the objects, **in that** the heat is removed from the heated process baths (B, E) by a cooling process, wherein the heat, eliminated by the cooling process, is withdrawn from the heated cooling medium used by a heat exchanging process and provided to operate the evaporation process, and the cooled cooling medium is introduced afresh into the cooling process, and
d) supplying the cleaned rinsing water, in the form of a distillate, to a distillate storage tank (D), from which the clean rinsing water is provided for rinsing surface-treated aluminium objects.

2. Method according to claim 1, **characterised in that** the temperature of the heat-releasing process bath or baths (B, E) is controlled by the heat which is obtained from these baths (B, E) and is required for the evaporation process.

3. Method according to claim 1 or 2, **characterised in that** the heat, which is obtained from the process baths (B, E), is supplied to additional heat-requiring means, for example a room heater (R).

4. Method according to one of claims 1 to 3, **characterised in that** the evaporation process for cleaning the rinsing water is controlled in such a manner that the rinsing water concentrate, which is produced in addition to the cleaned rinsing water in the form of a distillate and contains the impurities, has a density which corresponds to the density of an appropriate spent process bath.

5. Apparatus for the chemical and/or electrolytic treatment of aluminium surfaces, having at least one process bath (B, E) for performing a chemical and/or electrolytic treatment step which releases reaction heat, a cooling means for cooling the at least one process bath and a means for cleaning the rinsing water used, **characterised by**
- a rinsing water circuit (2) including a distillate storage tank (D), one or more rinsing baths (S1, S2), which are in liquid connection with the distillate storage tank (D) and communicate with said tank at the output end, and an evaporator unit (VD1, VD2) which communicates at the input end with the liquid discharges of the rinsing baths (S1, S2), and the output of said unit is in liquid connection with the distillate storage tank (D) for drawing-off the cleaned rinsing water in the form of a distillate,
- a coolant circuit for cooling the at least one process bath (B, E), and
- a heat exchanger unit (WT1, WT2), which is inserted into the coolant circuit of a process bath (B, E), for withdrawing the heat entrained in the coolant, the input for heating-up the evaporator unit (VD1, VD2) communicating with the heat-eliminating output of said heat exchanger unit so that the evaporator unit (VD1, VD2) can be operated with the heat obtained from the process bath (B, E).

6. Apparatus according to claim 5, **characterised in that** storage tanks (SP1, SP2) are interposed between the rinsing baths (S1, S2) and the evaporator unit (VD1, VD2).

7. Apparatus according to claim 6, **characterised in that** each storage tank (SP1, SP2) has associated therewith its own evaporator unit (VD2 or VD1 respectively).

8. Apparatus according to one of claims 5 to 7, **characterised in that** heat exchanger units (WT1, WT2) are associated with a plurality of heat-releasing process baths (B, E), and **in that** the heat exchanger units (WT1, WT2) communicate with a common buffer tank (P1) for the intermediate storage of the obtained heat.

9. Apparatus according to one of claims 5 to 8, **characterised in that** additional means (R), which utilise the obtained heat, communicate with the buffer tank (P1).

## Revendications

1. Procédé pour la mise en oeuvre d'une installation (1) pour le traitement chimique et/ou électrolytique de surfaces en aluminium réalisé en plusieurs étapes au cours desquelles se produit un dégagement de chaleur, procédé comprenant un refroidissement des bains de traitement réchauffés au cours du traitement et une mise à disposition d'eau de rinçage pure, **caractérisé en ce que** l'eau de rinçage nécessaire à la mise en oeuvre de l'installation (1) ainsi que le fluide de refroidissement utilisé pour refroidir les bains (B, E) réchauffés par le traitement, circulent dans un circuit et que le procédé comprenne les étapes suivantes :
a) Mise à disposition d'eau de rinçage pure,
b) rinçage à l'eau des objets en aluminium dont la surface a été traitée,
c) epuration de l'eau de rinçage usée par un processus d'évaporation, sachant que l'énergie nécessaire à la mise en oeuvre du processus d'évaporation est extraite du ou des bains (B, E) utilisés pour le traitement de la surface des objets en aluminium de manière à ce que la chaleur soit retirée des bains de traitement (B, E) réchauffés au moyen d'un processus de refroidissement, sachant que la chaleur évacuée par ce processus de refroidissement au moyen d'un d'échange thermique est extraite du liquide de refroidissement réchauffé et mise à disposition pour mettre en oeuvre un processus d'évaporation et que ce liquide de refroidissement est de nouveau réutilisé au cours d'un processus de refroidissement et,
d) ecoulement de l'eau de rinçage épurée se présentant sous la forme d'eau distillée dans un réservoir collecteur d'eau distillée (D) qui met à disposition l'eau de rinçage pure afin de rincer les objets en aluminium dont la surface a été traitée.

2. Procédé selon la revendication 1, **caractérisé en ce que** le tempérage du ou des bains de traitement (B, E) dégageant de la chaleur est assuré par extraction de la chaleur de ces bains (B, E), chaleur indispensable au processus d'évaporation.

3. Procédé selon la revendication 1 ou 2, **caractérisé en ce que** la chaleur extraite des bains de traitement (B, E) est acheminée vers d'autres équipements utilisant de la chaleur, par exemple un chauffage central (R).

4. Procédé selon l'une des revendications 1 à 3, **caractérisé en ce que** le processus d'évaporation destiné à épurer l'eau de rinçage est piloté de telle manière qu'en plus de l'eau de rinçage épurée disponible sous la forme d'eau distillée, les impuretés présentes dans le liquide de rinçage concentré présentent une densité qui corresponde à celle de la densité des bains de traitement épuisés.

5. Dispositif pour le traitement chimique et/ou électrolytique de surfaces en aluminium avec au moins un bain de traitement (B, E) pour réaliser une étape de traitement chimique et/ou électrolytique dégageant de la chaleur de réaction, avec un dispositif de refroidissement pour refroidir au moins un bain de traitement et avec un dispositif d'épuration de l'eau de rinçage utilisée **caractérisé par**
- un circuit d'eau de rinçage (2) comprenant un réservoir collecteur d'eau distillée (D), un ou plusieurs bains de rinçage (S1, S2) dont le fluide est raccordé par leur côté sortie à un réservoir collecteur d'eau distillée (D) et une unité d'évaporation (VD1, VD2) raccordée côté entrée à l'évacuation de liquide des bains de rinçage (S1, S2) et dont la sortie est raccordée au réservoir collecteur d'eau distillée (D) afin que l'on puisse en soutirer de l'eau de rinçage épurée disponible sous la forme d'eau distillée,
- un circuit de liquide de refroidissement destiné à refroidir au moins un bain de traitement (B, E) et
- une unité d'échange thermique (WT1, WT2) intégrée dans le circuit de liquide de refroidissement d'un bain de traitement (B, E) afin d'extraire la chaleur accumulée dans le liquide de refroidissement et dont la sortie d'évacuation de la chaleur est raccordée à l'entrée destinée à chauffer l'unité d'évaporation (VD1, VD2), de sorte que l'unité d'évaporation (VD1, VD2) puisse être exploitée grâce à la chaleur extraite du bain de traitement (B, E).

6. Dispositif selon la revendication 5, **caractérisé en ce qu'**un réservoir collecteur (SP1, SP2) est intégré entre les bains de rinçage (S1, S2) et l'unité d'évaporation (VD1, VD2).

7. Dispositif selon la revendication 6, **caractérisé en ce que** chaque réservoir collecteur (SP1, SP2) est raccordé à sa propre unité d'évaporation (VD2 ou VD1).

8. Dispositif selon l'une des revendications 5 à 7, **caractérisé en ce que** plusieurs bains de traitement (B, E) dégageant de la chaleur comportent des unités d'échange thermique (WT1, WT2) et que ces unités d'échange thermique (WT1, WT2) sont raccordées à un réservoir tampon (P1) commun destiné à stocker la chaleur extraite.

9. Dispositif selon l'une des revendications 5 à 8, **caractérisé en ce que** d'autres équipements (R) utilisant la chaleur extraite sont raccordés au réservoir tampon (P1).
